# EUROPEAN PATENT APPLICATION

(11) **EP 1 310 816 A2**
(43) Date of publication of application: **14.05.2003**
(21) Application number: 02425515.0
(22) Date of filing: 05.08.2002
(51) Int. Cl.: G02B 6/44

(54) **Improved optical fibre cables termination module**

(30) Priority: 21.09.2001 IT RM20010181 U
(71) Applicant: FIBOT HOLDING LTD., Pieta'MSD - Malta (MT)
(72) Inventor:
(74) Representative: Iannone, Carlo Luigi

(57) **Abstract**

The invention concerns an improved optic fibre cable termination module, of the type comprising a front element (13), incorporating a honeycomb panel for supporting the optic connectors, and a plurality of connection modular trays, comprising an inner panel (1) and a main body (2), coupled each other by adjustable spacing means.

## Description

The present invention relates to the general field of the termination of optic fibre cables, and particularly concerns to the construction and the method of use of an improved termination module.

Still more particularly, the present invention concerns improvements relevant to the construction and the method of use of a termination module comprising particular solutions improving their functional features, the installation operations and the maintenance interventions.

As it is well known, companies managing the telephone and telecommunication services and which realises their own cable transmission network, usually employ the optic fibres as transmission physical support, said fibres being collected in bundles to realise optic cables, in view of the high transportation capability and efficiency of the same.

Practically, cables containing fibres are packaged in a different way, with groups of single fibres or with groups of multiple fibres, or with band cables, the single element of which is no more the fibre, but a bundle of four or eight or twelve fibres. In any case, the general trend is to use cables having a higher concentration of fibres.

Also in consideration of the fact that nominal lengths used for the industrial manufacturing of cables are presently six thousands, usual standard is to use the optic fibre both for long distance connections, so called interurban connections between main phone central, and for urban connections, so called distribution connections between secondary and central users.

As to the long distance connections, for the couplings between single lengths of cables, connection container have been realised that are particularly suitable for this aim, described in the Italian patent application N° RM99A000456, filed by the same Applicant.

Amount of fibres used is therefore remarkably increasing, so that the space in environment such as central and other rooms wherein fibre terminations are housed and placed, and where they are more accessible is always more reduced, with consequent difficulty of access and manoeuvring and maintenance, thus jeopardising efficiency and safety.

Concentration of these terminations, i.e. the points where the fibre terminations are concentrated, is realised within cabinet and/or panels having different sizes and technique in function of their conformation.

As it is well known, optic connectors represent fibre access points that, even with the increase of the number of fibres and of the relevant terminations always more crowds and occupy the space within the cabinets.

Since the fibre terminations are managed for all the installation activities of the same, as for the joints, the sleeves, the connectors, the so called patch cords, and so on, they are grouped within a certain number of containers having different sizes and shapes, usually named modules, even if said "modules" have not been studied, nor realised in such a way to satisfy the basic modularity requisites, i.e. simplicity, functionality and easiness of assembling to realise easily enlargeable structures without reducing the efficiency.

In view of these and others drawbacks of the known technique, the same Applicant has filed an Italian patent application, with the number RM99A000457, aiming to provide an independent and completely functional module for all the termination operation of the fibres and satisfying all the installation needings of the different confirmations of the fibres and of the cabinets housing the terminations, but also having reduced sizes and representing the elementary unit from which starting to realise in a short time a more complex concentration of the terminations.

This object has been specifically reached by a optic fibre cable termination module basically comprising an envelope made up of metallic and/or plastic material, defining a containment inner space for dispersing the optic fibres and an open upper section providing a rack element for supporting connection modular trays for optic fibres, as well as a front element, incorporating a honeycomb panel for supporting optic connectors, having a front bent portion delimiting a containment and dispersion space of the optic patch cords.

However, it has been noted that, notwithstanding the solution adopted, cables of the optic fibres, entering and exiting from the termination modules, crowd the lateral edge spaces of the same, thus making particularly difficult every intervention and/or maintenance operation on the termination modules installed, as well as dangerous for the safety of the operating optic fibres.

In this situation it is included the solution according to the present invention, aiming to make the access to the termination modules easier, included to the connection trays contained within said modules, providing said modules with a articulated mechanical system, making it possible the guided extraction of the module from the frame supporting it.

It is therefore specific object of the present invention an improved optic fibre cable termination module, of the type comprising a front element, having a honeycomb panel for supporting the optic connectors, and a plurality of connection modular trays, comprising an inner panel and a main body, coupled each other by adjustable spacing means, said adjustable spacing means preferably comprising a pantograph articulated mechanism.

Particularly, according to the present invention, said pantograph articulated mechanism provides a knee element, folded inward and coupled with the inner panel and with the main body by two rods, respectively pivoted in correspondence of the C shaped bent portion of the inner base and of the main body, and two slidable rods, preferably provided with sliding anti-friction wheels, and stop elements, respectively within the other part of the C shaped bent portion of the inner base and of the main body.

Further, according to the invention, said optic fibre cable termination element comprises means for blocking in a closed position, preferably at least a blocking element, on the main body, coupling with a corresponding blocking hole on the inner panel.

Always according to the invention, said optic fibre cable termination element can comprise a collector, placed under the main body, comprising distribution means and stop means for the mono-fibre cables, said distribution means of the mono-fibre cables preferably comprising at least a hemi-reel and/or at least two flexible bands, on the two sides of the collector, for the passage of the cables and for maintaining the same under light tension.

Furthermore, always according to the present invention, said optic fibre cable termination element comprises means for opening the access to the inner zone of the termination module, moving the front element, said opening means preferably comprising a pin about which the front element can rotate, and means for blocking the front element in a closed position, preferably at least a blocking element on the front element, coupling with a corresponding blocking hole provided on the main body.

Further details, particularity and advantages of the present invention will be evident from the following description, making reference to the enclosed drawings, wherein it is shown for illustrative but not limitative purposes the preferred embodiment.

In the drawings:

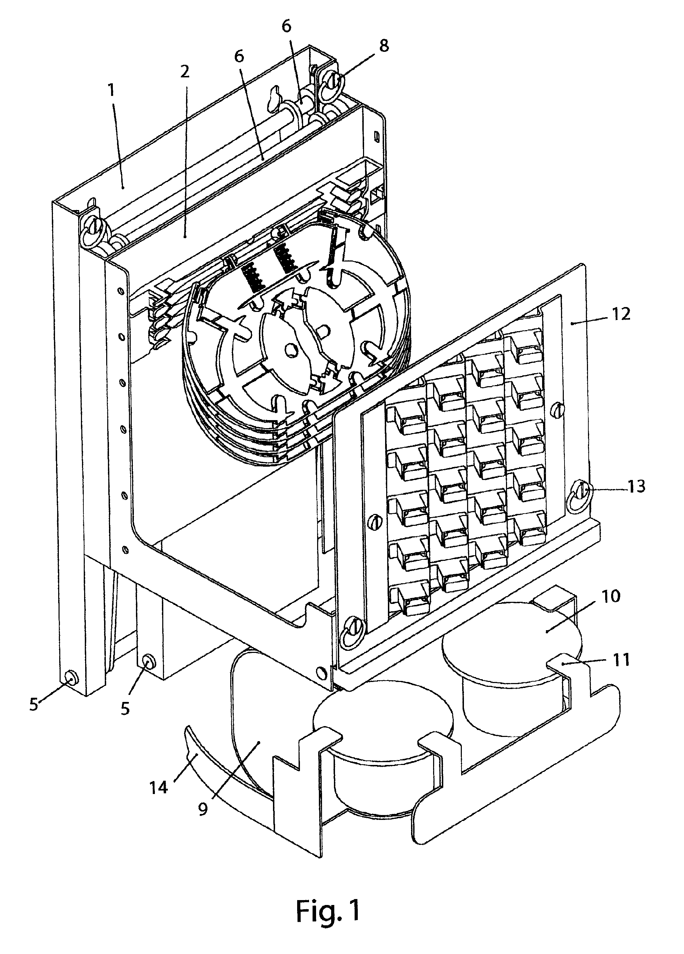

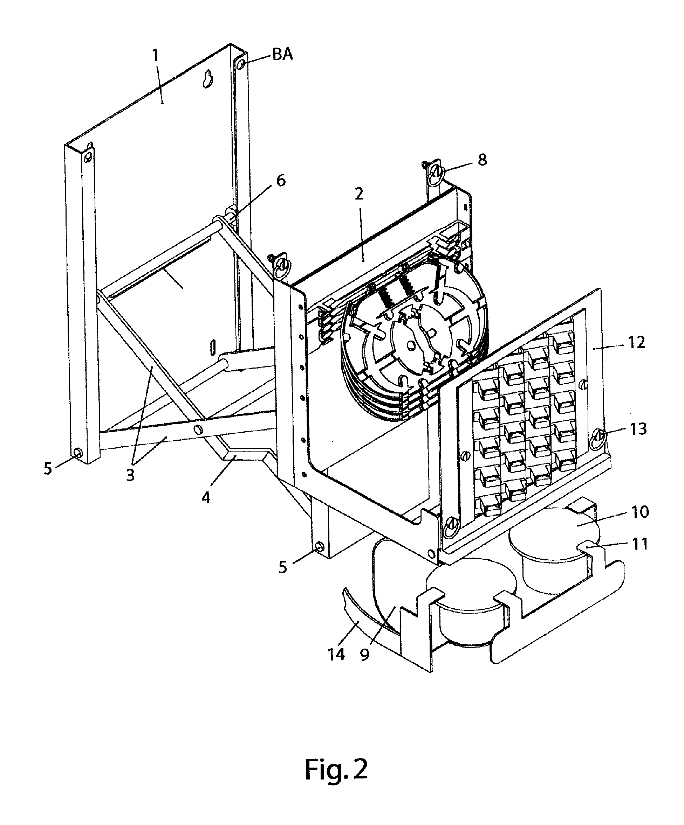

figure 1 shows a top perspective view of the optic fibre cable termination module according to the present invention in a closed position; and
figure 1 shows a top perspective view of the optic fibre cable termination module according to the present invention in an open position.

Making specific reference to the drawings, it can be noted that, assuming in any case that the structure is realised according to the best technique presently available for this kind of products, the termination module according to the present invention is comprised of two essential components, namely an inner panel 1, fixed to the wall of the frame and/or cabinet, and a main body 2, realising the termination module, coupled each other by a pantograph articulated mechanism 3.

Said pantograph articulated mechanism 3 provides a knee element 4, folded inward, in order to reduce the dimensions of the same mechanism, and is coupled with the inner panel 1 and with the main body 2 by two rods 5, respectively pivoted in correspondence of the lower portion of the C shaped bent portion of the inner base and of the main body, and two slidable rods 6, provided with sliding anti-friction wheels, respectively inside the remaining part of C shaped bent portion of the inner base and of the main body.

Each one of the slidable rods 6 is provided with a retainer 7 that, preventing an excessive lengthening of the pantograph, makes the closure of the mechanism easier.

In order to allow a safe blocking in a closed position of the termination module, two blocking elements 8 are provided on the main body 2, coupling with corresponding blocking holes 8A, provided on the upper part of the lug of the C shaped bent portion of the inner panel 1.

Main body 2 of the transmission module has a collector 9, placed under the same body, creating an area for dispersion the mono-fibre cables (not shown), exiting from the termination module, and comprising two hemi-reels 10, about which the cables and two stop elements 11 are distributed, to maintain said cable stopped in the recovery position. Two further flexible bands 14, on the two sides of the collector 9, realise a retention and guide seat for the mono - fibre cables exiting from the collector 9, after having been wound about the two hemi-reels 10, maintaining the same in a slightly stretched position and consequently allowing the movement of the termination module, maintaining the exceeding length of the same cables in a protected position.

Front element 12 of the optic fibre connector can be opened, overturning about a pin, to make the access to the inner zone of the termination module easier.

To maintain the front element in a closed position, and to allow its opening only when necessary, two blocking elements 13 are provided on the same front element, coupling with corresponding blocking holes, not shown, provided on the bent portion of the outer portion of the main body 2.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

**1.** Improved optic fibre cable termination module, of the type comprising a front element (13), incorporating a honeycomb panel for supporting the optic connectors, and a plurality of connection modular trays, **characterised in that** it comprises an inner panel (1) and a main body (2), coupled each other by adjustable spacing means.

**2.** Improved optic fibre cable termination module according to claim 1, **characterised in that** said adjustable spacing means comprise a pantograph articulated mechanism (3).

**3.** Improved optic fibre cable termination module according to claim 2, **characterised in that** said pantograph articulated mechanism provides a knee element (4).

**4.** Improved optic fibre cable termination module according to claim 2 or 3, **characterised in that** said pantograph articulated mechanism (3) is coupled with the inner panel (1) and with the main body (2) by two rods (5), respectively pivoted in correspondence of the lower part of the C shaped bent portion of the inner base and of the main body, and two slidable rods (6), respectively within the remaining part of the C shaped bent portion of the inner base and of the main body.

**5.** Improved optic fibre cable termination module according to claim 4, **characterised in that** said slidable rods (6) are provided with sliding anti-friction wheels.

**6.** Improved optic fibre cable termination module according to claim 5, **characterised in that** said slidable rods (6) are provided with stop elements.

**7.** Improved optic fibre cable termination module according to one of the preceding claims 1 - 6, **characterised in that** comprises means for blocking in a closed position.

**8.** Improved optic fibre cable termination module according to claim 7, **characterised in that** said means for blocking the termination module in a closed position comprise at least a blocking element (8), on the main body (2), coupling with a corresponding blocking hole (8A) on the inner panel (1).

**9.** Improved optic fibre cable termination module according to one of the preceding claims 1 - 8, **characterised in that** further comprise a collector (9), placed under the main body (2), comprising distribution means and stop means for the mono-fibre cables.

**10.** Improved optic fibre cable termination module according to claim 9, **characterised in that** said distribution means of the mono-fibre cables comprise at least a hemi-reel (10).

**11.** Improved optic fibre cable termination module according to claim 9 or 10, **characterised in that** said distribution means comprise at least two flexible curved bands (14), on the two sides of the collector (9), for the passage of the cables and for maintaining the same under light tension.

**12.** Improved optic fibre cable termination module according to one of the preceding claims 1-11, **characterised in that** comprises means for opening the access to the inner zone of the termination module, moving the front element (12).

**13.** Improved optic fibre cable termination module according to claim 12, **characterised in that**, said opening means comprise a pin about which the front element (12) can rotate.

**14.** Improved optic fibre cable termination module according to claim 12 or 13, **characterised in that** further comprises means for blocking the front element (12) in a closed position.

**14.** Improved optic fibre cable termination module according to claim 13, **characterised in that** said blocking means comprise at least a blocking element (13) on the front element (12), coupling with a corresponding blocking hole provided on the main body (2).

**15.** Improved optic fibre cable termination module according to each one of the preceding claims, substantially as illustrated and described.
